(19) Europäisches Patentamt
European Patent Office
Office européen des brevets

(11) **EP 3 288 199 B1**

(12) **EUROPEAN PATENT SPECIFICATION**

(45) Date of publication and mention
of the grant of the patent:
**12.04.2023 Bulletin 2023/15**

(21) Application number: **16185284.3**

(22) Date of filing: **23.08.2016**

(51) International Patent Classification (IPC):
*H04J 3/06* (2006.01)

(52) Cooperative Patent Classification (CPC):
**H04J 3/0667**

(54) **DEVICE AND METHOD OF TRANSMITTING SYNCHRONIZATION MESSAGES IN A COMPUTER NETWORK**

VORRICHTUNG UND VERFAHREN ZUM SENDEN VON SYNCHRONISIERUNGSNACHRICHTEN IN EINEM COMPUTERNETZWERK

DISPOSITIF ET PROCÉDÉ DE TRANSMISSION DE MESSAGES DE SYNCHRONISATION DANS UN RÉSEAU INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.02.2018 Bulletin 2018/09**

(73) Proprietor: **Robert Bosch GmbH**
**70442 Stuttgart (DE)**

(72) Inventor: **Diarra, Aboubacar**
**70469 Stuttgart-Feuerbach (DE)**

(56) References cited:
**US-A1- 2013 215 889    US-A1- 2013 227 172**
**US-A1- 2016 149 692**

• **SÉBASTIEN JOBERT FRANCE TELECOM FRANCE: "Discussion about Best Master Clock Algorithm and Announce messages for PTPv2 telecom profile frequency-oriented;WD58", ITU-T DRAFT ; STUDY PERIOD 2009-2012, INTERNATIONAL TELECOMMUNICATION UNION, GENEVA ; CH, vol. 13/15, 11 April 2011 (2011-04-11), pages 1-5, XP044058670, [retrieved on 2011-04-11]**
• **JEAN-LOUP FERRANT ET AL: "Development of the first IEEE 1588 telecom profile to address mobile backhaul needs", IEEE COMMUNICATIONS MAGAZINE, IEEE SERVICE CENTER, PISCATAWAY, US, vol. 48, no. 10, 1 October 2010 (2010-10-01), pages 118-126, XP011319415, ISSN: 0163-6804**

**Description**

Background

The invention relates to a device and method of transmitting synchronization messages in a computer network.

Synchronizing clocks in a computer network is performed for example using the precision time protocol well-known as PTP.

At the start-up of the computer network a single time base is established, and a grandmaster sends "Sync" messages to network notes comprising clocks configured as slaves. The network notes receive the "Sync" message and correct the clock in conformity with a reference time provided in the "Sync" message to establish the single time base throughout the computer network.

Time synchronization to the single time base is necessary in heterogeneous in-vehicle time and safety critical networks and other industrial networks. For certain applications, such as event data recording or system analysis, it is however desirable to synchronize to a plurality of time bases.

US 2016/0149692 A1 discloses a UTC based time synchronization where a switch generates an announcement message periodically and transmits the generated announcement message to another switch to inform other stations of the presence of a grandmaster.


Disclosure of the invention

It is therefore a goal to provide a reliable and robust transmission of time synchronization messages of different time bases in a computer network.

This is achieved by a method according to claim 1. According to claim 9, this is further achieved by a corresponding device which comprising a port configurable for transmitting a message.

A synchronization interval for sending the message depends on the predetermined time base. A plurality of messages for different time bases may be transmitted this way via the same data link at different times. This allows distinguishing synchronization messages and/or configuring ports by the time they are sent or received.

This way the message is sent via ports presently in a state for sending or receiving a corresponding message.

Advantageously the port is configurable for sending or receiving the message. This increases flexibility, as the same ports can be configured as master for sending or slave for receiving synchronization information.

Advantageously the port is configurable for sending or receiving messages of determined time base only. This way a port may ignore or drop messages comprising synchronization information not needed at the respective device from an input buffer.

Advantageously the configuration of the port and the transmission of the message are synchronized depending on information about the time base. This way ports are configured for sending or receiving the synchronization messages by the time they are sent or received.

Advantageously a first device of the computer network is configured as first grandmaster indicating time according to a first predetermined time base, and a second device of the computer network is configured as second grandmaster indicating time according to a second predetermined time base. This way independent grandmasters provide different time bases.

Advantageously the message is transmitted according to a precision time protocol, e.g. according to IEEE 1588-2008. This provides a robust implementation.

Advantageously a first port of the device is configurable as master port for sending and a second port of this device is configurable as slave port for receiving synchronization information. This allows receiving and forwarding synchronization information.

Advantageously a configuration of at least one port of a respective device is selectable for sending or receiving from the states:

Master port in first time base and Master port in second time base,
Master port in first time base; Slave port second time base,
Master port in first time base; Master and Slave port second time base,
Slave port in first time base; Master port in second time base,
Slave port in in first time base and second time base,
Slave port in first time base; Master and Slave port in second time base,
Master and Slave port in first time base; Master port in second time base,
Master and Slave port in first time base; Slave port in second time base,
Master and Slave port in first time base; Master and Slave port in second time base,
Master port in in first time base,

Slave port in in first time base,
Master port in second time base,
Slave port in second time base.

This increases flexibility in the design of the computer network.

A corresponding computer readable medium comprises computer executable instructions for performing the method.

Further aspects of the invention will become apparent by consideration of the detailed description and accompanying drawings.

Embodiments of the present invention are illustrated by way of example referencing the figures by the accompanying drawings, in which like references indicate similar elements and in which

Figure 1    shows part of a computer network,

Figure 2    shows schematically a message transmission schedule between two grandmasters.

In the following description, numerous specific details are introduced to provide a thorough understanding of, and enabling description for, embodiments of the suggested method. One skilled in the art, however, will recognize that these embodiments can be practiced without one or more of the specific details, or with other components, systems, etc.

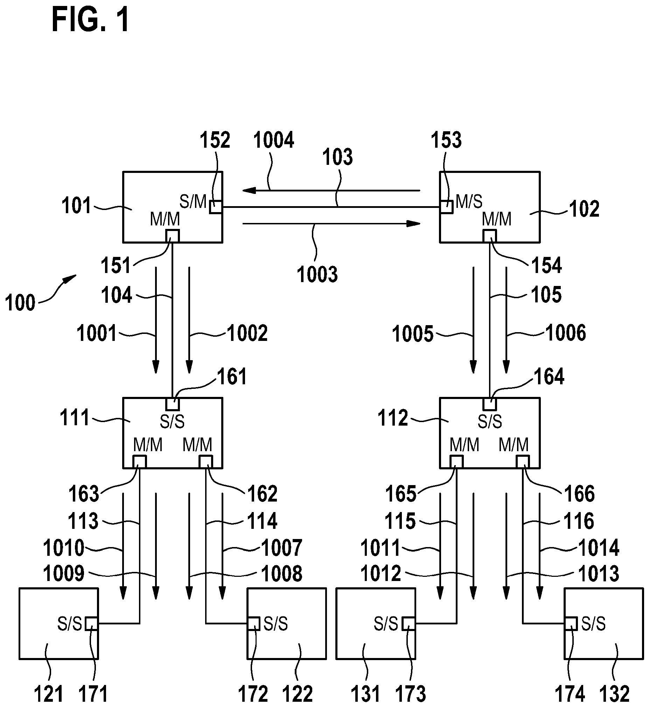

Figure 1 depicts a part of a computer network 100. The computer network 100 may be an in-vehicle network that connects different electronic control units providing various features for operating the vehicle. The computer network 100 may also connect other electronic control units that provide features in the industrial field, for example for operating production lines.

The computer network 100 comprises a first device 101 configured as a first grand master for indicating time according to a first time base $t_{rel}$.

The computer network 100 comprises a second device 102 configured as a second grand master for indicating time according to a second time base $t_{abs}$.

The computer network 100 is not limited to two grandmasters. The computer network 100 may comprise a plurality of grandmasters or less than four grandmasters.

The first device 101 and the second device 102 are connected by a first data link 103.

The first device 101 is connected to a third device 111 via a second data link 104. The second device 102 is connected to a fourth device 112 via a third data link 105.

The first device 101 in the example comprises a first port 151 configurable as a master port for sending synchronization information according to a first time base $t_{rel}$ and for sending synchronization information according to a second time base $t_{abs}$ via the second data link 104. The respective synchronization information is sent in particular in a first message 1001 and a second message 1002 respectively.

The first device 101 in the example comprises a second port 152 configurable as a master port for sending synchronization information according to the first time base $t_{rel}$ and as a slave port for receiving synchronization information according to the second time base $t_{abs}$ via the first data link 103. The respective synchronization information is sent and received in particular in a third message 1003 and a fourth message 1004 respectively.

The second device 102 in the example comprises a third port 153 configurable as a slave port for sending synchronization information according to the first time base $t_{rel}$ and as a master port for sending synchronization information according to the second time base $t_{abs}$ via the first data link 103. The respective synchronization information is received and sent in particular in the third message 1003 and the fourth message 1004 respectively.

The second device 102 in the example comprises a fourth port 154 configurable as a master port for sending synchronization information according to the first time base $t_{rel}$ and as a master port for sending synchronization information according to the second time base $t_{abs}$ via the third data link 105. The respective synchronization information is sent in particular in a fifth message 1005 and a sixth message 1006 respectively.

The third device 111 in the example comprises a fifth port 161 configurable as a slave port for receiving synchronization information according to the first time base $t_{rel}$ and as a slave port for receiving synchronization information according to the second time base $t_{abs}$ via the second data link 104. The respective synchronization information is received in particular in the first message 1001 and the second message 1002 respectively.

The fourth device 112 in the example comprises a sixth port 164 configurable as a slave port for receiving synchronization information according to the first time base $t_{rel}$ and as a slave port for receiving synchronization information according to the second time base $t_{abs}$ via the third data link 105. The respective synchronization information is received in particular in the fifth message 1005 and the sixth message 1006 respectively.

The third device 111 is connected to a fifth device 121 via a fourth data link 113 and to a sixth device 122 via a fifth data link 114.

The fourth device 112 is connected to a seventh device 173 via a sixth data link 115 and to a eighth device via a seventh data link 116.

The third device 111 in the example comprises a seventh port 162 configurable as a master port for sending synchronization information according to the first time base $t_{rel}$ and as a master port for sending synchronization information according to the second time base $t_{abs}$ via the fifth data link 114. The respective synchronization information is sent in particular in a seventh message 1007 and an eighth message 1008 respectively.

The third device 111 in the example comprises an eighth port 163 configurable as a master port for sending synchronization information according to the first time base $t_{rel}$ and as a master port for sending synchronization information according to the second time base $t_{abs}$ via the fourth data link 113. The respective synchronization information is sent in particular in a ninth message 1009 and a tenth message 1010 respectively.

The fourth device 112 in the example comprises a ninth port 165 configurable as a slave port for sending synchronization information according to the first time base $t_{rel}$ and as a slave port for sending synchronization information according to the second time base $t_{abs}$ via the sixth data link 115. The respective synchronization information is sent in particular in an eleventh message 1011 and a twelfth message 1012 respectively.

The fourth device 112 in the example comprises a tenth port 166 configurable as a slave port for sending synchronization information according to the first time base $t_{rel}$ and as a slave port for sending synchronization information according to the second time base $t_{abs}$ via the seventh data link 116. The respective synchronization information is sent in particular in a thirteenth message 1013 and a fourteenth message 1014 respectively.

In the example, the fifth device 121 comprises a eleventh port 171, the sixth device 122 comprises a twelfth port 172, the seventh device 131 comprises a thirteenth port 173 and the eighth device 132 comprises a fourteenth port 174, that are adapted to receive respective synchronization information transmitted via the respective aforementioned data links. The respective synchronization information is received in particular in the respective of the seventh message 1007, eighth message 1008, ninth message 1009, tenth message 1010, eleventh message 1011, twelfth message 1012, thirteenth message 1013 and fourteenth message 1014.

The connection between the devices may not be direct links. Instead or additionally indirect links via devices may be implemented. Instead or additionally, the ports may be configurable to send or receive data according to different time bases and in states different from the above described master or slave states.

The ports are configurable for transmitting the respective message, wherein the message indicates a time according to a predetermined time base, e.g. the time base the port is configured for sending or receiving, and wherein the message includes additional information about the predetermined time base. Preferably a port is configurable preferably for a predetermined time interval or statically for either sending or receiving the respective message. Preferably a port is configurable for sending or receiving the message of determined time base only. This means a port may drop messages of other than the determined time base or erase them from input buffer.

Preferably the message is transmitted using the precision time protocol according to IEEE 1588-2008.

When the first device 101 of the computer network 100 is configured as first grandmaster indicating time according to the first time base $t_{rel}$, and the second device 102 of the computer network 100 is configured as second grandmaster indicating time according to the second time base $t_{abs}$, this means that advantageously the second port 152 of the first device 101 is configurable as master port for sending and as slave port for receiving synchronization information.

Furthermore this means that the first port 151 of the first device 101 is configurable as master port for sending and the second port 152 of the first device 101 is configurable as slave port for receiving synchronization information.

The respective message preferably comprises additional information about the predetermined time base $t_{rel}$, $t_{abs}$. This information is for example a corresponding tag that is added to a precision time protocol message, preferably in an existing field or in an additional field. The respective port is configured preferably depending on the information about the time base. The port detects the additional information of a received message and processes it accordingly.

A configuration of a port of a respective device, e.g. of a grandmaster, is selectable for sending or receiving the message from the states:

Master port in first time base $t_{rel}$ and Master port in second time base $t_{abs}$,
Master port in first time base $t_{rel}$; Slave port second time base $t_{abs}$,
Master port in first time base $t_{rel}$; Master and Slave port second time base tabs,
Slave port in first time base $t_{rel}$; Master port in second time base $t_{abs}$,
Slave port in in first time base $t_{rel}$ and second time base $t_{abs}$,
Slave port in first time base $t_{rel}$; Master and Slave port in second time base $t_{abs}$,
Master and Slave port in first time base $t_{rel}$; Master port in second time base $t_{abs}$,
Master and Slave port in first time base $t_{rel}$; Slave port in second time base $t_{abs}$,
Master and Slave port in first time base $t_{rel}$; Master and Slave port in second time base $t_{abs}$,
Master port in in first time base $t_{rel}$,

Slave port in in first time base $t_{rel}$,
Master port in second time base $t_{abs}$,
Slave port in second time base $t_{abs}$.

Preferably the messages are transmitted in a predetermined synchronization interval for sending the message. Preferably the predetermined synchronization interval depends on the predetermined time base $t_{rel}$, $t_{abs}$.

Preferably, the configuration of the port and the transmission of the message are synchronized depending on information about the time base $t_{rel}$, $t_{abs}$.

Information about the time according to the time base is for example a timestamp, preferably according to the precision time protocol, preferably according to IEEE 1588-2008.

A predetermined transmission schedule is preferably used for transmitting the messages in the corresponding synchronization interval. This transmission schedule is for example stored in each device. A clock, e.g. according to the first time base $t_{rel}$ or the second time base $t_{abs}$ may be used in each device for that purpose.

Figure 1 shows schematically message transmission for synchronizing between the devices. Messages for synchronizing the other devices may also be sent in similar manner. Synchronization messages are in the example generally transmitted between the grandmasters and/or from there to the other devices according to IEEE 1588-2008. Also messages according to IEEE 802.1 AS-2011 may be used.

By use of "Sync" messages according to the Ethernet AVB protocol, a common time base is established between a plurality of devices. The corresponding ports of corresponding devices are configured in the example during the corresponding time interval for transmitting the respective synchronization information.

Preferably the first grandmaster comprises a clock for the time according to the first time base $t_{rel}$.

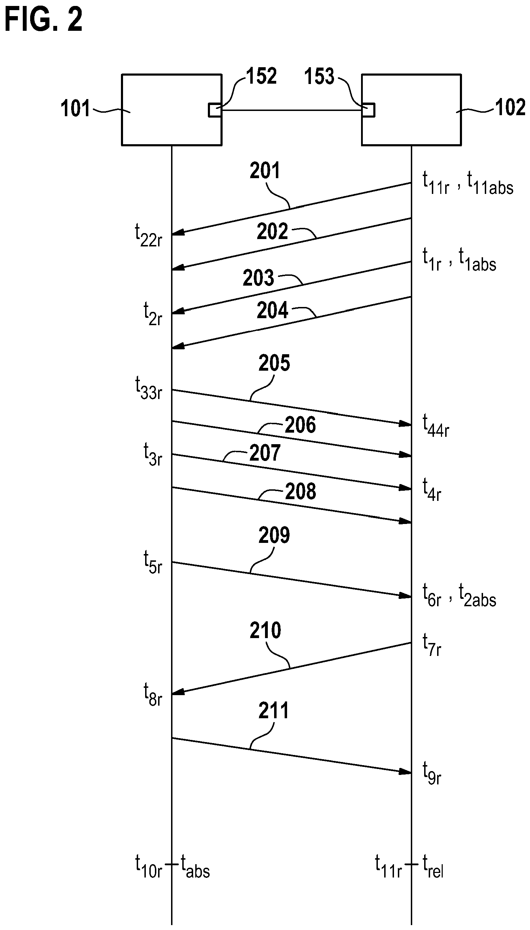

Preferably the second grandmaster comprises the clock for the second time base $t_{abs}$ and also provides another clock for the first time base $t_{rel}$. In this case, the corresponding second device 102 comprises two clocks in parallel. This additional clock may be used for clock synchronization of the time bases according to the method described below referencing figure 2.

Figure 2 shows schematically message transmission for synchronizing between the first grandmaster and the second grandmaster. In the example the first device 101 comprises the first grandmaster and the second device 102 comprises the second grandmaster. Messages for synchronizing the other devices may also be sent in similar manner. Synchronization messages are in the example generally transmitted as described before.

In the example the first grandmaster sends messages via the second port 152 of the first device 101 and the third port 153 of the second device 102 to the second grandmaster and vice versa. The second port 152 and the third port 153 are configured to send or receive the corresponding messages in different time intervals. This means that synchronization messages containing information about the predetermined time base $t_{rel}$, $t_{abs}$ are transmitted depending on the information about the predetermined time base $t_{rel}$, $t_{abs}$. To that end a corresponding transmission schedule for configuring the second port 152 and the third port 153 accordingly and for sending the corresponding messages in the different time intervals for the different predetermined time base $t_{rel}$, $t_{abs}$ is implemented in the respective device.

A common time base is established between the grandmasters. This is depicted in figure 2.

At the second device 102 at a current time $t_{11r}$ according to the first time base $t_{rel}$, that is the same time as a current time $t_{11abs}$ according to the second time base $t_{abs}$, as indicated by the respective clocks, the second grandmaster sends a first synchronization information 201, e.g. a corresponding "Sync" message for synchronizing the time according to the second time base $t_{abs}$, to the first grand master.

Afterwards information about the time $t_{11abs}$ of sending the first synchronization information 201 according to the second time base $t_{abs}$ is sent to the first grand master in a second synchronization message 202, e.g. a "Follow_Up" message including the time $t_{11abs}$ according to the second time base $t_{abs}$.

Afterwards at a further current time $t_{1r}$ according to the first time base $t_{rel}$ that is the same time as a further current time $t_{1abs}$ according to the second time base $t_{abs}$, as indicated by the respective clocks, the second grandmaster sends a third synchronization information 203, e.g. a corresponding "Sync" message for synchronizing the time according to the second time base $t_{abs}$, to the first grand master.

Afterwards information about the time $t_{1abs}$ of sending the third synchronization information 201 according to the second time base $t_{abs}$ is sent to the first grand master in a fourth synchronization message 204, e.g. a "Follow_Up" message including the time $t_{1abs}$ according to the second time base $t_{abs}$.

At the first device 101 the first grandmaster receives the first synchronization information 201 and the third synchronization information 203 at another current time $t_{22r}$, and $t_{2r}$ respectively as indicated by the respective clock.

Afterwards at a current time $t_{33r}$ according to the first time base $t_{rel}$ as indicated by the respective clock, the first grandmaster sends a fifth synchronization message 205, e.g. a corresponding "Sync" message for synchronizing the time according to the first time base $t_{rel}$, to the second grand master.

Afterwards information about the time $t_{33rel}$ of sending the fifth synchronization message 205 according to the first time base $t_{rel}$ is sent to the first grand master in a sixth synchronization message 206, e.g. a "Follow_Up" message including the time $t_{33rel}$ according to the first time base $t_{rel}$.

Afterwards at a current time $t_{3r}$ according to the first time base $t_{rel}$ as indicated by the respective clock, the first grandmaster sends a seventh synchronization message 207, e.g. a corresponding "Sync" message for synchronizing the time according to the first time base $t_{rel}$, to the second grand master.

Afterwards information about the time $t_{3r}$ of sending the seventh synchronization message 207 according to the first time base $t_{rel}$ is sent to the second grand master in a eighth synchronization message 208, e.g. a "Follow_Up" message including the time $t_{3r}$ according to the first time base $t_{rel}$.

Afterwards at a current time $t_{5r}$ according to the first time base $t_{rel}$ as indicated by the respective clock, the first grandmaster sends a ninth synchronization message 209, e.g. a corresponding "Pdelay_Req" message for requesting the path delay on the third data link 103 to the second grand master.

Afterwards, at a current time $t_{6r}$ according to the first time base $t_{rel}$ that is the same time as a current time $t_{2abs}$ according to the second time base, as indicated by the respective clocks, the ninth synchronization message 209 is received at the second grand master.

Afterwards at a current time $t_{7r}$ according to the first time base $t_{rel}$ as indicated by the respective clock, the second grandmaster sends a tenth synchronization message 210, e.g. a corresponding "Pdelay_Resp" message including the requested path delay response, e.g. the time of receipt $t_{2abs}$ of the ninth synchronization message 209 according to the second time base $t_{abs}$.

Afterwards, at a current time $t_{8r}$ according to the first time base $t_{rel}$ as indicated by the respective clocks, the tenth synchronization message 210 is received at the first grand master.

Afterwards the first grandmaster sends a eleventh synchronization message 211, e.g. a corresponding "ePdelay_Resp" message including the time $t_{5r}$ of sending the ninth synchronization message 209, and the time of receipt $t_{8r}$ of the tenth synchronization message 210 according to the first time base $t_{rel}$.

From the exchanged times a first propagation time $T_{link\_rel}$ and a second propagation time according to the second time base $T_{link\_abs}$ are determined considering a first neighbor rate ratio $r_{rel}$ and a second neighbor rate ratio $r_{abs}$ respectively. The current time $t_{10r}$ according to the first time base $t_{rel}$ and the current time $t_{abs}$ according to the second time base $t_{abs}$ at the first device 101 and the current time $t_{11r}$ according to the first time base $t_{rel}$ at the second device 102 are calculated based on the following equations:

$$t_{rel} = t_{3r} + T_{link\_rel} + ( t_{11r} - t_{4r} )^* r_{rel} \, , \qquad t_{abs} = t_{1abs} + T_{link\_abs} + ( t_{10r} - t_{2r} )^* r_{abs}$$

$$T_{link\_rel} = ( t_{8r} - t_{5r} ) - ( t_{7r} - t_{6r} )^* \, r_{rel} / 2 \, , \qquad T_{link\_abs} = ( t_{2abs} - t_{1abs} ) - ( t_{5r} - t_{2r} )^* \, r_{abs} / 2$$

$$r_{rel} = ( t_{3r} - t_{33r} ) / ( t_{4r} - t_{44r} ) \, , \qquad r_{abs} = ( t_{1abs} - t_{11abs} ) / ( t_{2r} - t_{22r} )$$

This way the time at the first device 101 is synchronized according to the second time base $t_{abs}$. Likewise on both, the first device 101 and the second device 102, the respective times according the first time base $t_{rel}$ are synchronized to each other.

After having received the respective synchronization messages, each of the further devices configured as a corresponding slave node can compute the current time according to the first time base $t_{rel}$ or second time base $t_{abs}$ to synchronize their clocks.

Additionally or alternatively to, "Sync" messages in combination with corresponding "Follow_Up" messages, also "Sync" messages alone may be used that carry the content of the "Follow_Up" messages.

In particular a computer program may be used for implementing the various steps of the data transmission in the respective components of the systems.

**Claims**

1. Method for a computer network (100), wherein a message is transmitted, wherein the message indicates a time according to a predetermined time base ($t_{rel}$, $t_{abs}$), wherein the message includes additional information about the predetermined time base ($t_{rel}$, $t_{abs}$), and wherein a state of a port (151) of a device (101) of the computer network (100) for transmitting the message is configured according to the predetermined time base ($t_{rel}$, $t_{abs}$), wherein a synchronization interval for sending the message depends on the predetermined time base ($t_{rel}$, $t_{abs}$), **characterized in that** the device (101) is a first device, which is connected to a second device (102) by a first data link (103), and that the port (151) is configurable as a master port for sending synchronization information according to a first time

base ($t_{rel}$) and for sending synchronization information according to a second time base ($t_{abs}$) via a second data link (104).

2. Method according to claim 1, **characterized in that** the port (151) is configurable for sending or receiving the message.

3. Method according to any of the preceding claims, **characterized in that** the port (151) is configurable for sending or receiving messages of determined time base ($t_{rel}$, $t_{abs}$) only.

4. Method according to any of the preceding claims, **characterized in that** the configuration of the port and the transmission of the message are synchronized depending on information about the time base ($t_{rel}$, $t_{abs}$).

5. Method according to any of the preceding claims, **characterized in that** the first device (101) of the computer network (100) is configured as first grandmaster indicating time according to the first predetermined time base ($t_{rel}$), and a second device (102) of the computer network (100) is configured as second grandmaster indicating time according to the second predetermined time base ($t_{abs}$).

6. The method according to any of the preceding claims, **characterized in that** the message is transmitted according to a precision time protocol, in particular according to IEEE 1588-2008.

7. The method according to any of the preceding claims, **characterized in that** a first port (151) of the device (101) is configurable as master port for sending and a second port (152) of this device (101) is configurable as slave port for receiving the synchronization information.

8. The method according to any of the preceding claims, **characterized in that** a configuration of at least one port of a respective device is selectable for sending or receiving from the states:

Master port in first time base ($t_{rel}$) and Master port in second time base ($t_{abs}$),
Master port in first time base ($t_{rel}$); Slave port second time base ($t_{abs}$),
Master port in first time base ($t_{rel}$); Master and Slave port second time base ($t_{abs}$),
Slave port in first time base ($t_{rel}$); Master port in second time base ($t_{abs}$),
Slave port in in first time base ($t_{rel}$) and second time base ($t_{abs}$),
Slave port in first time base ($t_{rel}$); Master and Slave port in second time base ($t_{abs}$),
Master and Slave port in first time base ($t_{rel}$); Master port in second time base ($t_{abs}$),
Master and Slave port in first time base ($t_{rel}$); Slave port in second time base ($t_{abs}$),
Master and Slave port in first time base ($t_{rel}$); Master and Slave port in second time base ($t_{abs}$),
Master port in in first time base ($t_{rel}$),
Slave port in in first time base ($t_{rel}$),
Master port in second time base ($t_{abs}$),
Slave port in second time base ($t_{abs}$).

9. Device (101) in a computer network (100), wherein the device (101) comprises a port (151) configurable for transmitting a message, wherein the message indicates a time according to a predetermined time base ($t_{rel}$, $t_{abs}$), wherein the message includes additional information about the predetermined time base ($t_{rel}$, $t_{abs}$), and wherein the port (151) is configured depending on the information about the predetermined time base ($t_{rel}$, $t_{abs}$), wherein a synchronization interval for sending the message depends on the predetermined time base ($t_{rel}$, $t_{abs}$), **characterized in that** the device (101) is connectable to a second device (102) by a first data link (103), and that the port (151) is configurable as a master port for sending synchronization information according to a first time base ($t_{rel}$) and for sending synchronization information according to a second time base ($t_{abs}$) via a second data link (104).

10. A computer readable medium comprising computer executable instructions which when executed by a computer, cause the computer to carry out the method of any one of claims 1 to 8.

**Patentansprüche**

1. Verfahren für ein Computernetzwerk (100), wobei eine Nachricht übertragen wird, wobei die Nachricht eine Zeit gemäß einer vorbestimmten Zeitbasis ($t_{rel}$, $t_{abs}$) angibt, wobei die Nachricht zusätzliche Informationen über die

vorbestimmte Zeitbasis ($t_{rel}$, $t_{abs}$) umfasst, und wobei ein Zustand eines Ports (151) einer Vorrichtung (101) des Computernetzwerks (100) zum Übertragen der Nachricht gemäß der vorbestimmten Zeitbasis ($t_{rel}$, $t_{abs}$) konfiguriert wird, wobei ein Synchronisationsintervall zum Senden der Nachricht von der vorbestimmten Zeitbasis ($t_{rel}$, $t_{abs}$) abhängt, **dadurch gekennzeichnet, dass** die Vorrichtung (101) eine erste Vorrichtung ist, die durch eine erste Datenverbindung (103) mit einer zweiten Vorrichtung (102) verbunden ist, und dadurch, dass der Port (151) als ein Masterport zum Senden von Synchronisationsinformationen gemäß einer ersten Zeitbasis ($t_{rel}$) und zum Senden von Synchronisationsinformationen gemäß einer zweiten Zeitbasis ($t_{abs}$) über eine zweite Datenverbindung (104) konfiguriert werden kann.

2. Verfahren nach Anspruch 1, **dadurch gekennzeichnet, dass** der Port (151) zum Senden oder Empfangen der Nachricht konfiguriert werden kann.

3. Verfahren nach einem der vorhergehenden Ansprüche, **dadurch gekennzeichnet, dass** der Port (151) nur zum Senden oder Empfangen von Nachrichten einer bestimmten Zeitbasis ($t_{rel}$, $t_{abs}$) konfiguriert werden kann.

4. Verfahren nach einem der vorhergehenden Ansprüche, **dadurch gekennzeichnet, dass** die Konfiguration des Ports und die Übertragung der Nachricht in Abhängigkeit von Informationen über die Zeitbasis ($t_{rel}$, $t_{abs}$) synchronisiert werden.

5. Verfahren nach einem der vorhergehenden Ansprüche, **dadurch gekennzeichnet, dass** die erste Vorrichtung (101) des Computernetzwerks (100) als ein erster Grandmaster konfiguriert ist, der Zeit gemäß der ersten vorbestimmten Zeitbasis ($t_{rel}$) angibt, und eine zweite Vorrichtung (102) des Computernetzwerks (100) als ein zweiter Grandmaster konfiguriert ist, der Zeit gemäß der zweiten vorbestimmten Zeitbasis ($t_{abs}$) angibt.

6. Verfahren nach einem der vorhergehenden Ansprüche, **dadurch gekennzeichnet, dass** die Nachricht gemäß einem Präzisionszeitprotokoll, insbesondere gemäß IEEE 1588-2008, übertragen wird.

7. Verfahren nach einem der vorhergehenden Ansprüche, **dadurch gekennzeichnet, dass** ein erster Port (151) der Vorrichtung (101) konfigurierbar ist als Masterport zum Senden und ein zweiter Port (152) dieser Vorrichtung (101) konfigurierbar ist als Slaveport zum Empfangen der Synchronisationsinformationen.

8. Verfahren nach einem der vorhergehenden Ansprüche, **dadurch gekennzeichnet, dass** eine Konfiguration mindestens eines Ports einer jeweiligen Vorrichtung zum Senden oder Empfangen aus dem folgenden Zuständen ausgewählt werden kann:

   Masterport in erster Zeitbasis ($t_{rel}$) und Masterport in zweiter Zeitbasis ($t_{abs}$),
   Masterport in erster Zeitbasis ($t_{rel}$); Slaveport in zweiter Zeitbasis ($t_{abs}$),
   Masterport in erster Zeitbasis ($t_{rel}$); Master- und Slaveport in zweiter Zeitbasis ($t_{abs}$),
   Slaveport in erster Zeitbasis ($t_{rel}$); Masterport in zweiter Zeitbasis ($t_{abs}$),
   Slaveport in erster Zeitbasis ($t_{rel}$) und zweiter Zeitbasis ($t_{abs}$),
   Slaveport in erster Zeitbasis ($t_{rel}$); Master- und Slaveport in zweiter Zeitbasis ($t_{abs}$),
   Master- und Slaveport in erster Zeitbasis ($t_{rel}$); Masterport in zweiter Zeitbasis ($t_{abs}$),
   Master- und Slaveport in erster Zeitbasis ($t_{rel}$); Slaveport in zweiter Zeitbasis ($t_{abs}$),
   Master- und Slaveport in erster Zeitbasis ($t_{rel}$); Master- und Slaveport in zweiter Zeitbasis ($t_{abs}$),
   Masterport in erster Zeitbasis ($t_{rel}$),
   Slaveport in erster Zeitbasis ($t_{rel}$),
   Masterport in zweiter Zeitbasis ($t_{abs}$),
   Slaveport in zweiter Zeitbasis ($t_{abs}$).

9. Vorrichtung (101) in einem Computernetzwerk (100), wobei die Vorrichtung (101) einen Port (151) umfasst, der zum Übertragen einer Nachricht konfiguriert werden kann, wobei die Nachricht eine Zeit gemäß einer vorbestimmten Zeitbasis ($t_{rel}$, $t_{abs}$) angibt, wobei die Nachricht zusätzliche Informationen über die vorbestimmte Zeitbasis ($t_{rel}$, $t_{abs}$) umfasst, und wobei der Port (151) in Abhängigkeit von den Informationen über die vorbestimmte Zeitbasis ($t_{rel}$, $t_{abs}$) konfiguriert wird, wobei ein Synchronisationsintervall zum Senden der Nachricht von der vorbestimmten Zeitbasis ($t_{rel}$, $t_{abs}$) abhängt, **dadurch gekennzeichnet, dass** die Vorrichtung (101) durch eine erste Datenverbindung (103) mit einer zweiten Vorrichtung (102) verbunden werden kann, und dadurch, dass der Port (151) als ein Masterport zum Senden von Synchronisationsinformationen gemäß einer ersten Zeitbasis ($t_{rel}$) und zum Senden von Synchronisationsinformationen gemäß einer zweiten Zeitbasis ($t_{abs}$) über eine zweite Datenverbindung (104) konfiguriert werden kann.

10. Computerlesbares Medium, umfassend computerausführbare Anweisungen, die bei Ausführung durch einen Computer den Computer zum Durchführen des Verfahrens nach einem der Ansprüche 1 bis 8 veranlassen.

## Revendications

1. Procédé pour un réseau informatique (100), dans lequel un message est transmis, dans lequel le message indique un temps selon une base de temps prédéterminée ($t_{rel}$, $t_{abs}$), dans lequel le message comprend des informations supplémentaires relatives à la base de temps prédéterminée ($t_{rel}$, $t_{abs}$), et dans lequel un état d'un port (151) d'un dispositif (101) du réseau informatique (100) pour transmettre le message est configuré selon la base de temps prédéterminée ($t_{rel}$, $t_{abs}$), dans lequel un intervalle de synchronisation pour l'envoi du message dépend de la base de temps prédéterminée ($t_{rel}$, $t_{abs}$), **caractérisé en ce que** le dispositif (101) est un premier dispositif, qui est connecté à un second dispositif (102) par une première liaison de données (103), et **en ce que** le port (151) est configurable en tant que port maître pour l'envoi d'informations de synchronisation selon une première base de temps ($t_{rel}$) et pour l'envoi d'informations de synchronisation selon une seconde base de temps ($t_{abs}$) par l'intermédiaire d'une seconde liaison de données (104).

2. Procédé selon la revendication 1, **caractérisé en ce que** le port (151) est configurable pour l'envoi ou la réception du message.

3. Procédé selon l'une quelconque des revendications précédentes, **caractérisé en ce que** le port (151) est configurable pour l'envoi ou la réception de messages de la base de temps déterminée ($t_{rel}$, $t_{abs}$) uniquement.

4. Procédé selon l'une quelconque des revendications précédentes, **caractérisé en ce que** la configuration du port et la transmission du message sont synchronisées en fonction d'informations relatives à la base de temps ($t_{rel}$, $t_{abs}$).

5. Procédé selon l'une quelconque des revendications précédentes, **caractérisé en ce que** le premier dispositif (101) du réseau informatique (100) est configuré en tant que première horloge maîtresse indiquant le temps selon la première base de temps prédéterminée (trel), et un second dispositif (102) du réseau informatique (100) est configuré en tant que seconde horloge maîtresse indiquant le temps selon la seconde base de temps prédéterminée ($t_{abs}$) .

6. Procédé selon l'une quelconque des revendications précédentes, **caractérisé en ce que** le message est transmis selon un protocole de temps de précision, en particulier selon la norme IEEE 1588-2008.

7. Procédé selon l'une quelconque des revendications précédentes, **caractérisé en ce qu'**un premier port (151) du dispositif (101) est configurable en tant que port maître pour l'envoi et un second port (152) de ce dispositif (101) est configurable en tant que port esclave pour la réception des informations de synchronisation.

8. Procédé selon l'une quelconque des revendications précédentes, **caractérisé en ce qu'**une configuration d'au moins un port d'un dispositif respectif est sélectionnable pour un envoi ou une réception à partir des états de :

port maître dans la première base de temps ($t_{rel}$) et port maître dans la seconde temps ($t_{abs}$),
port maître dans la première base ($t_{rel}$) ; port esclave dans la seconde base de temps ($t_{abs}$),
port maître dans la première base de temps ($t_{rel}$) ; port maître et esclave dans la seconde base de temps ($t_{abs}$),
port esclave dans la première base de temps ($t_{rel}$) ; port maître dans la seconde base de temps ($t_{abs}$),
port esclave dans la première base de temps ($t_{rel}$) et la seconde base de temps ($t_{abs}$),
port esclave dans la première base de temps ($t_{rel}$) ; port maître et esclave dans la seconde base de temps ($t_{abs}$),
port maître et esclave dans la première base de temps ($t_{rel}$) ; port maître dans la seconde base de temps ($t_{abs}$),
port maître et esclave dans la première base de temps ($t_{rel}$) ; port esclave dans la seconde base de temps ($t_{abs}$),
port maître et esclave dans la première base de temps ($t_{rel}$) ; port maître et esclave dans la seconde base de temps ($t_{abs}$),
port maître dans la première base de temps ($t_{rel}$),
port esclave dans la première base de temps ($t_{rel}$),
port maître dans la seconde base de temps ($t_{abs}$),
port esclave dans la seconde base de temps ($t_{abs}$).

**9.** Dispositif (101) dans un ordinateur (100), le dispositif (101) comprenant un port (151) configurable pour transmettre un message, dans lequel le message indique une heure selon une base de temps prédéterminée ($t_{rel}$, $t_{abs}$), dans lequel le message comporte des informations supplémentaires relatives à la base de temps prédéterminée ($t_{rel}$, $t_{abs}$), et dans lequel le port (151) est configuré en fonction des informations relatives à la base de temps prédéterminée ($t_{rel}$, $t_{abs}$), dans lequel un intervalle de synchronisation pour l'envoi du message dépend de la base de temps prédéterminée ($t_{rel}$, $t_{abs}$), **caractérisé en ce que** le dispositif (101) peut être connecté à un second dispositif (102) par une première liaison de données (103), et **en ce que** le port (151) est configurable en tant que port maître pour l'envoi d'informations de synchronisation selon une première base de temps ($t_{rel}$) et pour l'envoi d'informations de synchronisation selon une seconde base de temps ($t_{abs}$) par l'intermédiaire d'une seconde liaison de données (104).

**10.** Support lisible par ordinateur comprenant des instructions exécutables par ordinateur qui, à leur exécution par un ordinateur, amènent l'ordinateur à mettre en œuvre le procédé selon l'une quelconque des revendications 1 à 8.

# FIG. 1

# FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160149692 A1